Europäisches Patentamt

European Patent Office

Office européen des brevets

(19)

(11) Publication number: **0 182 656**
A2

(12) **EUROPEAN PATENT APPLICATION**

(21) Application number: 85308429.1

(22) Date of filing: 20.11.85

(51) Int. Cl.⁴: **F 16 J 15/40**

(30) Priority: 20.11.84 US 673551

(43) Date of publication of application: 28.05.86
Bulletin 86/22

(84) Designated Contracting States: **AT BE CH DE FR GB IT
LI LU NL SE**

(71) Applicant: **Ferrofluidics Corporation, 40 Simon Street,
Nashua New Hampshire 03061 (US)**

(72) Inventor: **Raj, Kuldip, 11 Christina Road, Merrimack New
Hampshire 03054 (US)**

(74) Representative: **Slight, Geoffrey Charles et al, Graham
Watt & Co. Riverhead, Sevenoaks Kent TN13 2BN (GB)**

(54) Ferrofluid seal apparatus and method.

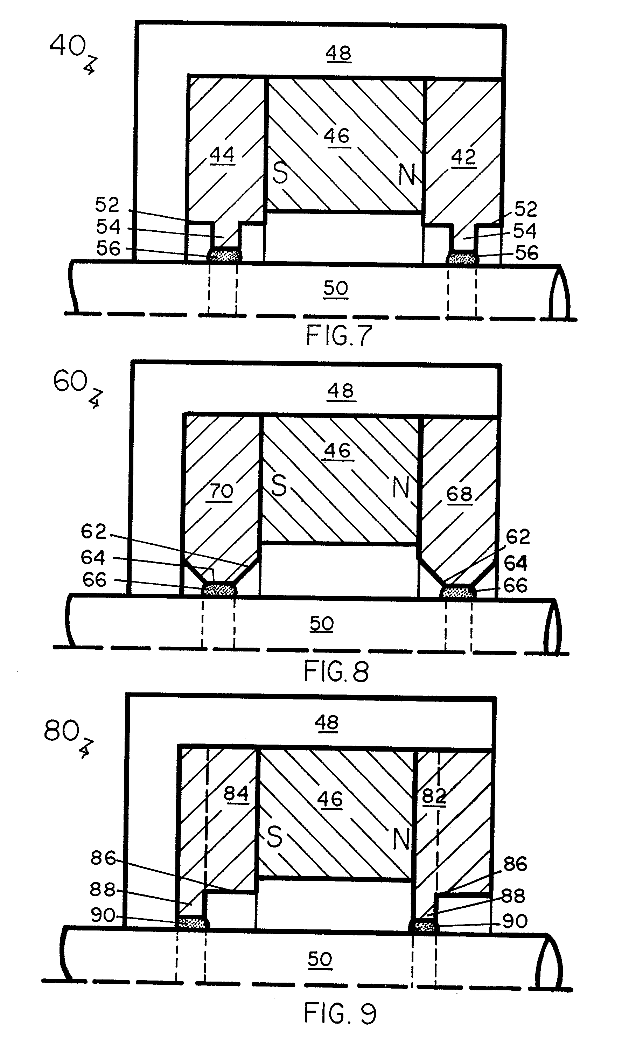

(57) A ferrofluid exclusion seal apparatus comprises an annular permanent magnet (46) and at least one pole piece (42 or 44) one end (52) of which is shaped with a step (54) to form with the surface of the shaft (50) to be sealed a sealing gap (56) for ferrofluid and radial air gaps on either side to provide a defined magnetic flux gradient across the free surface or ferrofluid in the sealing gap (56), thereby providing a ferrofluid seal which has a static pressure which does not change with time. Instead of a central step (54) the pole piece may have a side step (88) (Fig. 9) or a tapered end design (Fig. 8) providing a sealing gap (66) and radial air gaps (62) on either side.

# FERROFLUID SEAL APPARATUS AND METHOD

The present invention relates to ferrofluid seal apparatus and a method of providing same.

Ferrofluid rotary exclusion seals at this time are primarily used in computer disk drive spindles to exclude bearing lubricant, vapours and air borne contaminants from reaching the magnetic disk area. Typically, the seal is required to have a differential pressure capacity of about 3 to 5 inches of water. A two pole pieces seal is generally employed to achieve the pressure and other performance objectives of the application such as the drag torque life expectancy and so on. The seal can be activated either by adding ferrofluid in the air gap of the top pole piece when the shaft is in place or adding the ferrofluid in the magnet area and then inserting the shaft, i.e. a self-activating seal. In the first method only half the seal is used. In the second method, both pole pieces are activated and the seal is utilized fully. The first method allows a precise control of ferrofluid inventory in the gap, whereas in the second method, the fluid distribution between the two pole pieces is generally uncontrolled.

Existing ferrofluid exclusion seals have a number of disadvantages. These limitations are independent of how ferrofluid is applied to the seal, but can be best described by using the example of single pole fill. As ferrofluid is added systematically to the pole piece, the pressure capacity of the seal increases. The ferrofluid quantity that provides the maximum seal pressure capacity is about 1.5 times the air gap volume. Any further increase in fluid quantity provides no benefit in pressure capacity. However, when this quantity of ferrofluid is used in the seal it has been found that the ferrofluid tends to separate. This separation, under some conditions, may lead to ferrofluid spewing, on shaft rotation. The second problem in using this quantity of ferrofluid is that the static pressure capacity of the seal decreases with time, and thus the seal although designed to handle normal pressures may be now prone to seal failure (bursting) in packaging, shipping and other circumstances. A droplet of ferrofluid dislodged during bursting may lead to system contamination and possible spewing under dynamic conditions. Now if the fluid quantity is increased beyond 1.5 times the gap volume, although there is no gain in the pressure capacity of the seal, the change in pressure capacity with time becomes less dramatic. When the ferrofluid quantity is about 2.5 times or more than the gap volume, the pressure capacity of the seal becomes independent of time and with greater quantities of fluid, the capacity may in fact increase with time. Thus, it is possible to solve the problem of decrease in pressure capacity with time by using a larger quantity of ferrofluid, but then the larger ferrofluid quantities lead to greater separation. On the other hand, one may solve the problem of separation by decreasing the fluid quantity. Preliminary experiments have shown that there is no ferrofluid separation for ferrofluid quantities equivalent to 0.8 times the gap volume, but this quantity of ferrofluid leads to a lower seal pressure capacity (0.2 times the maximum value). Furthermore, the decrease in pressure capacity with time becomes even more dramatic at this smaller ferrofluid inventory, and the life of seal is also reduced.

In the prior art, tapered and knife-like pole piece ends have been employed to concentrate the magnetic flux particularly in multiple stage seals or seals where a high pressure capacity of the seal is desired. For example, U.S. Patent 3,620,584 employs knife-like pole piece edges in a multiple-stage pressure-type seal to concentrate the magnetic flux. U.S. Patent 3,848,879 requires a pressurized air cavity with a liquid-liquid seal with a tapered pole piece apparently to concentrate magnetic flux and to provide a guard against ferrofluid splash. Russian Patent B8570 D/09 also relates to multiple-stage ferrofluid seals designed for high pressure capacity and employs dual magnets and tapered or triangular-type pole pieces to concentrate magnetic flux. Russian Patent G5264 D/28 employs two radially polarized magnets with the one end of the magnet tapered.

In summary, the current ferrofluid exclusion seals cannot be optimized with regard to all four parameters, e.g. pressure capacity, change in pressure capacity with time, ferrofluid separation and life. The present invention aims to mitigate this problem.

The present invention provides a ferrofluid rotary exclusion seal apparatus and method employing a controlled gradient magnetic flux field.

The ferrofluid seal apparatus of the invention comprises an annular permanent magnet and at least one pole piece with the end of the pole piece which is to form or forms the radial gap with the surface to be sealed such as that of a rotary shaft, to include a taper or step or an end structural configuration that provides a controlled and more particularly, a reduced magnetic field gradient in the radial gap.

It has been found that altering the magnetic flux field gradient of the radial gap such that the ferrofluid surfaces in the radial gap do not experience a large magnetic field gradient provides for an improved ferrofluid seal.

It has been found that by creating a defined step or taper in a pole piece, the magnetic flux distribution in the air or radial gap is altered in such a way that the ferrofluid surfaces do not experience a large magnetic field gradient. Furthermore, the ferrofluid surfaces are located in a magnetic field which is much higher than in a standard seal. Thus, even with the ferrofluid separation, the low saturation magnetization fluid at the boundary is held strongly by the magnetic field allowing no leakage or weeping. Ferrofluid has a tendency to be pulled into the smaller of the two gaps where the magnetic field is the strongest, which prevents formation of a ferrofluid bulge which is prone to leakage.

In some embodiments of the present invention, each pole piece may be viewed as consisting of two adjacent overlapping pole pieces of unequal widths and two well-defined radial gaps, suggesting a compound-type seal, which allows a minimum particle concentration gradient and thus behaves free of any drawbacks present in the standard prior art sealing technology.

A ferrofluid seal apparatus of the present invention has been found to satisfy all of the following requirements simultaneously that cannot presently be met with the existing technology due to the limitation on particle size in ferrofluids: no change in $\Delta P$ static with time; no ferrofluid separation in any orientation of the rotary shaft; no ferrofluid spewing under dynamic conditions; adequate seal life.

One application of ferrofluid seal apparatus and method in accordance with the present invention is in the computer disk drive spindle market.

The ferrofluid seal apparatus of the present invention has advantages over prior art ferrofluid seals in that: the seal achieves the maximum pressure capacity; the pressure capacity does not change with time; there is no ferrofluid separation for any orientation of the shaft; there is no ferrofluid splash when shaft is rotated; enough ferrofluid quantity is used in the seal to meet life requirements; the seal can be used in a single or double pole fill mode; further, it is only the configuration of the top pole piece that is important, since the bottom pole piece may be standard with any thickness or radial gap consistent with the requirements of the technology; also, the seal may be built in a single pole configuration with the magnetic circuit being completed through the bearing of the shaft.

The single domain magnetic particles in a ferrofluid follow a log normal distribution. The average magnetic particle diameter is in the range of $80A^O$ to $100A^O$. However, the size distribution ranges from about $30A^O$ to $250A^O$. In an external magnetic field such as that present in an exclusion seal, the particles experience a force proportional to their volume or $(diameter)^3$ in the direction of highest magnetic field.

$$FM = \frac{M\Delta H\ V}{4\pi} \quad \text{where} \quad V = \frac{\pi\ D^3}{6}$$

where FM = Magnetic force experienced by the particle

M = Saturation magnetization of the particle = 6000 Gauss

$\Delta H = H_2 - H_1$, Field difference,

V = Volume of particle,

D = Diameter of particle.

The particles thus drift towards the middle of the pole piece or point of maximum field flux. This motion is

0182656

- 8 -

opposed by the viscous drag on the particles.

$$Fs = 3 \pi D \eta u$$

Where $\eta$ = Viscosity of medium,

u = Terminal Velocity of particle.

At equilibrium Pm = Fs.

This leads to a time of separation ($\gamma$) given by:

$$\gamma = \frac{72 \pi L^2 \eta}{MD^2 (H_2 - H_1)}$$

Where L = length of ferrofluid column.

The above equation shows that the time it takes for ferrofluid to separate is: proportional to L or fluid quantity; proportional to fluid viscosity, i.e. higher viscosity fluid will take longer to separate; inversely proportional to $D^2$, i.e. ferrofluid synthesized with smaller particle size will take a long time to separate; and inversely proportional to magnetic field gradient, i.e. in a strong magnetic field gradient, the ferrofluid will separate in a shorter time.

A consideration of the particle diffusion equation leads to the relationship between the particle size and the magnetic field gradients for ferrofluid stability as follows:

| Magnet Field Gradient | Mean Particle Diameter Required for Ferrofluid Stability |
|---|---|
| (oe/cm) | $(A^{o})$ |
| $1 \times 10^{2}$ | 120 |
| $2 \times 10^{2}$ | 100 |
| $4 \times 10^{2}$ | 80 |
| $1 \times 10^{3}$ | 60 |
| $1 \times 10^{4}$ | 25 |

Thus a ferrofluid with a particle size of $80A^{o}$ is stable in a magnetic field gradient of $4 \times 10^{2}$ oe/cm. At higher values of the field gradient, the ferrofluid will separate.

Current exclusion seals on the average are designed with a flux density in the air gap of about 5,000 Gauss, an air gap of 0.008 inch (0.020 cm) and pole piece width = 0.040 inch (0.102 cm). The flux density in the air gap varies from the center of the pole pieces to the edge on the air and magnet side leading to a magnetic field gradient variation. The magnetic particles near the center of the radial gap experience the minimum magnetic force, and the particles at the outer edges of the gap experience the maximum force thereby establishing that ferrofluid quantity is an important parameter in the separation phenomenon. The maximum magnetic field gradient present in current ferrofluid exclusion seals is about $10^5$ oe/cm.

Current ferrofluids are synthesized with an average particle size of $100A^\circ$. These particles are stable in magnetic field gradients up to about $2 \times 10^2$ oe/cm. This means that the ferrofluids separate in the exclusion seals. For ferrofluids to be stable in current ferrofluid exclusion seals, the average particle size should be less than $25A^\circ$. The other possibility is to design exclusion seals with magnetic field gradients of less than $2 \times 10^2$ oe/cm; however, such an exclusion seal will have a very poor pressure capacity and the ferrofluid will not be retained under the centrifugal effects.

The present ferrofluid exclusion seal design for computer disk shafts is to minimize field gradients and control the quantity of ferrofluid and achieve the best balance among the four critical parameters, e.g. pressure capacity, change in pressure capacity with time, ferrofluid separation and life. Any field problems with the exclusion seal probably result from the fact that the mechanical tolerances and seal installation errors lead to an unbalance in these parameters.

At present, the lowest that can be achieved in regard to the average particle size with current ferrofluid synthesis methods is about $80A^O$. The ferrofluid seals may be designed with a lower magnetic field gradient to about $10^4$ oe/cm, but these combinations of parameters still lead to a ferrofluid separation. A particle size of $25A^O$ will not result in a ferrofluid separation, but it is presently unobtainable and it is questionable if such a small particle size is magnetic in nature.

It has been found that various pole piece configurations may be used to control, i.e. to reduce the magnetic field gradient of the air or radial gap. The pole pieces of the seal apparatus of the present invention have the one end which forms the air or radial gap (or the surface of the opposing shaft) tapered or with a symmetrical or assymetrical step to reduce the field gradient typically below $10^4$ oe/cm, for example to about $10^2$ oe/cm or lower where the ferrofluid has an average particle size of about 80 to 120 Angstroms. The seal apparatus of the present invention typically includes an axially polarized annular permanent magnet, e.g. 3M Plastiform having a magnetic gauss of about $1.4 \times 10^6$ gauss-oersteds (G-oe) and one or two annular pole pieces. Where a two or dual-stage exclusion seal apparatus is used only the top pole piece configuration need be altered to reduce the field gradient. Generally, the seal apparatus has a pole piece width of about 30 to 60 mils, a radial gap of 2 to 12 mils, e.g. 4 to 10 mils, and a pressure capacity per stage of about ½ to 2 psi suitable for use of the seal as an exclusion seal with a rotary shaft of a computer disk drive, a textile spindle, or the like.

The middle and side step pole pieces of the seal apparatus and the tapered, i.e. trapezoidal-like end pole pieces of the present invention provide a radial sealing gap with the surface of the shaft element to retain a sealing amount of ferrofluid and at least one or two adjacent radial air gaps. The sealing radial gap typically varies from about 2 to 8 mils, while the radial air gap typically ranges in one, or two gradient steps of from about 4 to 16 mils, e.g. 8 to 14 mils and generally ranges from about 2 to 3 times the sealing radial gap to provide a reduced magnetic flux field gradient across the free surfaces of the sealing ferrofluid in the sealing radial gap of about $10^4$ guass/cm or less, i.e. $10^2$ to $10^3$ gauss/cm. Thus, the mechanical structure of the pole piece end is generally step-like in design, typically one or two, or with a tapered or rounded end, or a series of finite steps, designed to provide a sealing, and an air gap. The amount of ferrofluid retained in the sealing radial gap is generally about 1.5 or more the sealing gap volume; however, because of the low free surface-to-surface magnetic flux gradient, the ferrofluid is retained without weeping and with a sufficient amount of ferrofluid so that no change in static pressure occurs with time.

In one embodiment of the present invention, a defined symmetrical tapered pole piece is used to concentrate magnetic flux in the center of the pole piece and with an outwardly extending defined taper on each side. In another embodiment a single or multiple step pole piece is used which is a practical and less expensive pole piece configuration since such a pole piece can be constructed easily by securing together two or more different pole piece elements. For example, a single step compound pole piece may be formed by stamping or machining a thick pole piece and a thin pole piece and then the pieces are secured together by a staking operation, or an adhesive, with the bottom pole piece being the thicker pole piece.

The ferrofluid typically employed in a seal apparatus of the present invention is a diester or hydrocarbon or other non-volatile liquid-based ferrofluid which generally has a magnetization of about 200 to 400 gauss and a viscosity of about 50 to 400 cps.

The present invention includes a method of sealing a rotary shaft with a seal which does not change in pressure capacity with time comprising forming a radial sealing gap and a larger adjacent radial air gap at the one end of a magnetic pole piece with the surface of the rotary shaft to be sealed and retaining within the radial sealing gap a defined quantity of a sealing amount of ferrofluid to form an O-ring ferrofluid seal and maintaining a magnetic flux gradient across the free surfaces of the ferrofluid in the radial sealing gap of about $10^4$ gauss/cm or less.

Specific embodiments of the present invention in both its apparatus and method aspects will now be described in detail by way of example, and not by way of limitation, with reference to drawings in which :

FIG. 1 is a sectional view of a prior art ferrofluid exclusion seal;

FIG. 2 is a graphical illustration of the static pressure capacity of the Fig. 1 seal with ferrofluid

inventory;

FIG. 3 is a schematic illustration of a ferrofluid weeping seal of Fig. 1;

FIG. 4 is a graphical illustration of the change in static seal pressure capacity of the Fig. 1 seal with time for varying ferrofluid seal inventory;

FIG. 5 is a graphic illustration of the variation of magnetic flux density of the Fig. 1 seal with distance along the pole piece end;

FIG. 6 is a graphical illustration of the magnetic field gradient in the air gap of the Fig. 1 seal with distance along the pole piece width;

FIG. 7 is a ferrofluid seal apparatus of the present invention having a step pole piece design;

FIG. 8 is another embodiment of a ferrofluid seal of the present invention with a tapered pole piece design;

FIG. 9 is a further embodiment of a ferrofluid seal of the present invention with a side step pole piece design;

FIG. 10 is a graphical illustration of the change in static pressure capacity of the Fig. 1 seal with time with varying amounts of ferrofluid inventory; and

FIGS. 11, 12 and 13 are graphical illustrations of a change in static pressure capacity of the ferrofluid seals of the present invention as illustrated respectively in Figs. 7, 8 and 9 with time for varying ferrofluid inventory quantities.

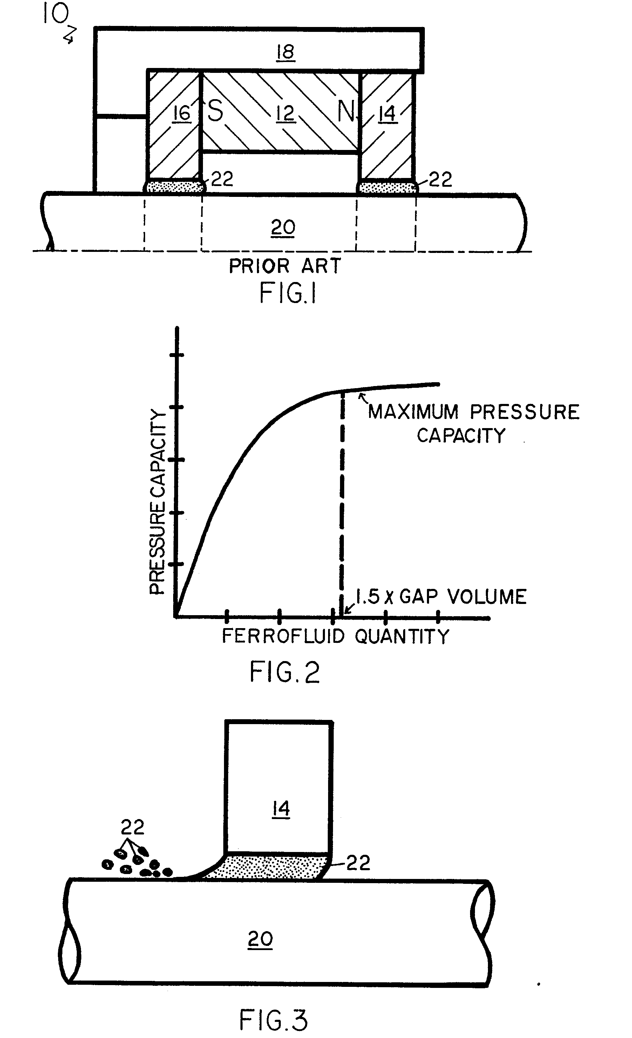

With reference now to the drawings, Fig. 1 is a schematic, illustrative sectional view of a prior art standard ferrofluid exclusion seal apparatus 10 comprising two pole pieces 14 and 16 of equal width and generally of about 40 mils and an annular, axially polarized permanent magnet 12 such as a 3M plastiform magnet with the permanent magnet and pole pieces surrounded by a non-magnetic housing 18 such as of alluminum which also serves as a heat sink. The seal apparatus 10 as shown and providing a dual-stage ferrofluid exclusion seal with the surface of a magnetically permeable rotary shaft 20 with each end of the pole pieces 14 and 16 having a radial gap of about 8 mils and containing therein a diester or hydrocarbon type ferrofluid 22 to effect the seal.

Fig. 2 is a graphical illustration of the static pressure capacity of the ferrofluid exclusion seal of Fig. 1 as a function of ferrofluid inventory beneath the ends of the pole pieces 14 and 16. As illustrated, the maximum pressure capacity is obtained when the ferrofluid quantity is about 1½ times the air gap volume beneath the ends of the pole pieces.

Fig. 3 is a schematic illustration illustrating the problem of weeping from the standard exclusion seal of Fig. 1. The magnetic particles within the ferrofluid, generally of about 100 Angstroms, at the free surfaces of the ferrofluid migrate toward the center of the gap where the magnetic field is the strongest. The depleted magnetic particle concentration in the ferrofluid at the free surfaces leads to a lower magnetization ferrofluid in these outer surface regions which can no longer be held by the weak fringing magnetic field from the magnetic annular permanent magnet, therefore leading to the loss of ferrofluid or ferrofluid weeping as illustrated.

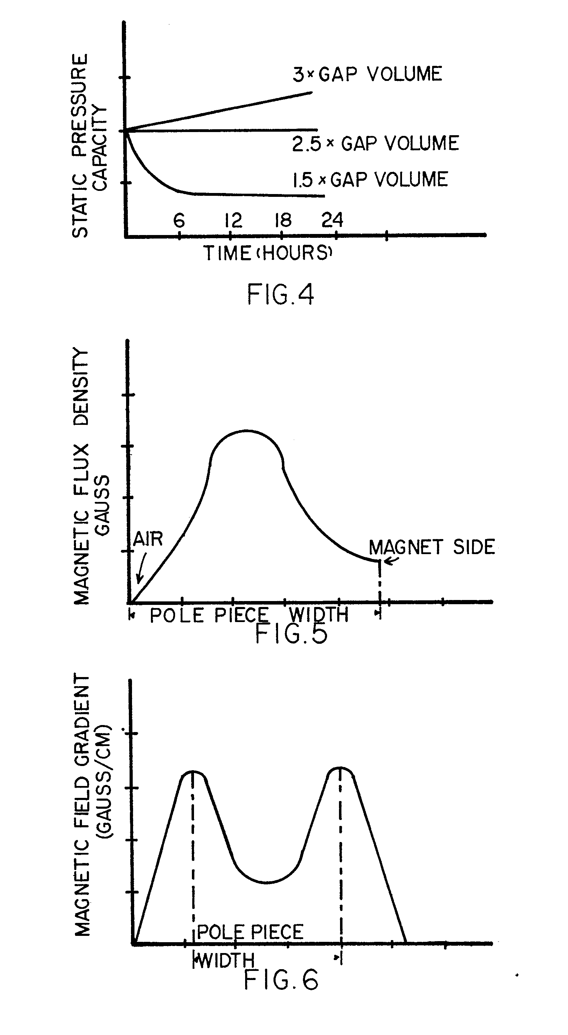

Fig. 4 is a graphical illustration of the variation of static seal pressure capacity of a Fig. 1 seal as a function of time for various ferrofluid inventories as illustrated. As shown wherein the ferrofluid inventory is 1.5 x the radial gap volume there is a significant decrease in the static seal pressure capacity with time for such a small ferrofluid inventory and the pressure capacity may decrease to 0.2 x the original value in 24 hours. As illustrated, as the ferrofluid inventory increases to 2.5 x the gap volume, there is no significant change in static pressure capacity with time and with 3 x the gap volume pressure capacity is increased. However, with a 2.5 and more ferrofluid inventory the standard exclusion seal of Fig. 1 cannot retain this ferrofluid volume and even with the volume of 1.5 there is significant weeping.

Fig. 5 is a graphical illustration of the variation of magnetic flux density of the Fig. 1 seal in the air gap under one pole piece with the maximum flux density existing at the center of the pole piece and with the magnetic flux density going to 0 on the air side and to some finite value on the magnet side with the distance along the pole piece width.

Fig. 6 is a graphic illustration of the magnetic field gradient in the air gap of the Fig. 1 seal with the maximum field gradient shown as existing at the pole piece edges and the minimum at the center of the pole piece width. In the Fig. 1 seal the maximum flux in the air gap typically ranged from 3,000 to 12,000 gauss with a magnetic field gradient ranging from $10^4$ gauss/cm to $10^6$ gauss/cm.

Fig. 7 is a schematic sectional illustration of a ferrofluid exclusion seal of the present invention 40 having a top 42 and a bottom 44 pole piece on either side and in a magnetic flux relationship with an axially polarized, annular, permanent magnet 46 with the pole pieces and magnet surrounded by a non-magnetic housing 48 which also serves as a heat sink to provide an exclusion seal for a rotary shaft 50 such as a rotary shaft of a computer disk drive. Each pole piece 42 and 44 has a one end 52 which extends into a close, non-contacting relationship with the surface of the shaft 50 with the pole pieces illustrated as having a middle step 54 extending toward the shaft to form a radial gap of about 6 mils. On either side of the step 54 is a radial gap of approximately 12 mils between the shaft and the end 52 of the pole piece. As in Fig. 1, the axially polarized permanent magnet 46 has a width of about 120 mils while the width of the pole pieces is about 60 mils each.

Fig. 8 is a schematic sectional illustration of another embodiment of the ferrofluid exclusion seal of the present invention 60 showing a non-magnetic housing and heat sink 48, an axially polarized annular permanent magnet 46, pole pieces 68 and 70 surrounding a magnetically permeable rotary shaft 50. The pole pieces 68 and 70 have symmetrically tapered ends or trapezoidal-like ends having sides 62, a flat side 64 which forms a radial gap of about 6 mils with the surface of the rotary shaft 50 while the tapered sides 62 extend from the radial gap of 6 mils and form at the outer edges a radial gap of 12 mils and with a ferrofluid magnetically retained in the radial gap of the 6 mils as illustrated. The tapered pole piece design illustrates that the magnetic field varies slowly from the small 6 mil gap to the large 12 mil radial gap, thus leading to a small magnetic field gradient across the width of the pole piece with a substantial flux density at the edges of the pole piece to retain the ferrofluid in the gap.

Fig. 9 is a schematic, sectional illustration of a further embodiment of a ferrofluid exclusion seal of the invention 80 within the non-magnetic housing 48 with an annular permanent magnet 46 and pole pieces 82 and 84, the pole pieces having a side step pole piece design. The step 88 in each pole piece extends to form a radial gap of about 6 mils at the surface of the rotary shaft 50 and with the other end of the pole piece 86 forming a radial gap of about 12 mils and with ferrofluid retained in the 6 mil radial gap to form a ferrofluid exclusion seal. Pole pieces 82 and 84 are illustrated as cut by dotted lines to indicate that such pole pieces may be compound pole pieces, that is, formed of two pole piece elements secured together. Alternatively, they may be unitary pole pieces.

In the ferrofluid seal apparatus as illustrated in Figs. 7, 8 and 9 of the invention, both pole pieces have been illustrated as of a particular middle-step, side-step or tapered pole piece design, that is, a dual-stage seal has been illustrated; however, it is within the scope of the invention that a single, middle-step, side-step or tapered pole piece may be employed together with an annular permanent magnet to form a single-stage ferrofluid exclusion seal, for example, as illustrated in U.S. Patent 4,407,508 issued October 4, 1983. Further, where a dual-stage exclusion seal is desired, only one of the pole pieces need be of the particular low field gradient design with the other pole piece being a standard pole piece, for example, as illustrated in the standard exclusion seal of Fig. 1, since the low field gradient pole piece design may merely be employed alone at the top or immediately adjacent to the environment to be unprotected. The embodiments illustrated are directed toward exclusion seals where pressure capacity of the seal is designed to be high, that is, generally more than 5 inches of water, and typically ranging from $\frac{1}{2}$ to 2 psi and in combination with an axially polarized, annular, permanent magnet. The combination of the middle-step, side-step or tapered or other pole pieces and designs are designed to minimize the magnetic field gradient across the end of the pole piece and therefore to minimize ferrofluid separation, ferrofluid splash or weeping, and to minimize any change in pressure capacity with time.

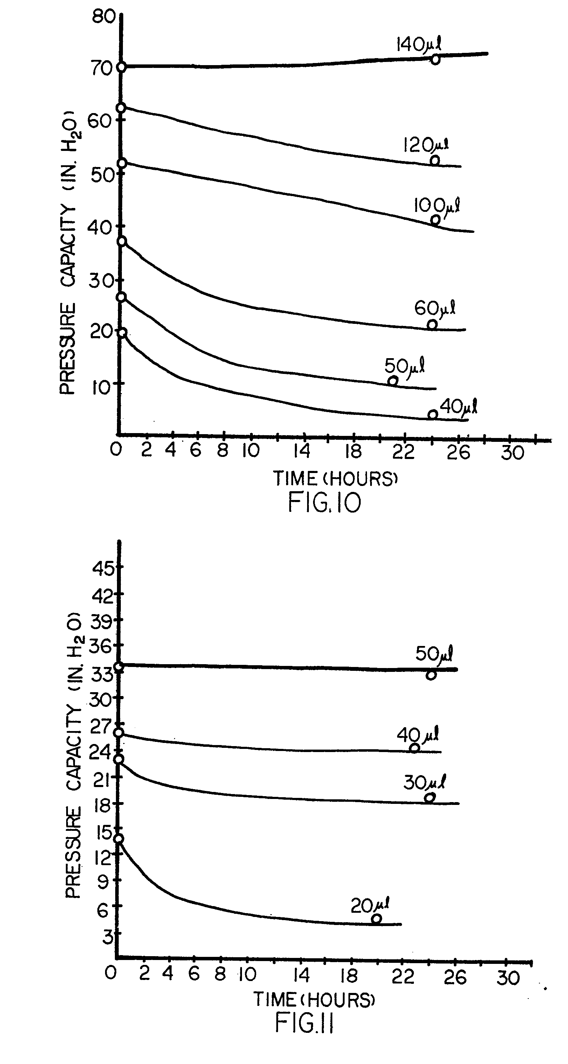

Figs. 10 to 13 are graphical illustrations of the variation in pressure capacity in inches of water with time and with various ferrofluid inventories in the air gap as actually tested for the ferrofluid exclusion seals illustrated in Fig. 1 and Figs. 7 to 9. As illustrated in Fig. 10, it is only when the ferrofluid inventory within the air gap reaches at least 140 microlitres that the pressure capacity does not vary with time, while at lower ferrofluid inventories there is a diminution in pressure capacity with time and significantly so in amounts below 100 microlitres.

As illustrated in Fig. 10 with the seal of Fig. 1, a pressure capacity of 70 inches of water with a ferrofluid inventory of 140 microlitres provides for a seal life time pressure capacity which is essentially unchanged, at least for 30 hours or more.

Fig. 11 is a graphical illustration wherein the capacity of the top pole element 42 of Fig. 7 with ferrofluid added to the top pole only is determined with time with the varying amounts of ferrofluid quantities in the air gap. As illustrated, only 50 microlitres of ferrofluid provides for a relatively constant pressure capacity with time. Although the pressure capacity of the seal is 33 inches of water in comparison to 70 inches of water for the standard seal, in an exclusion seal the amount of pressure capacity is usually not a critical design parameter.

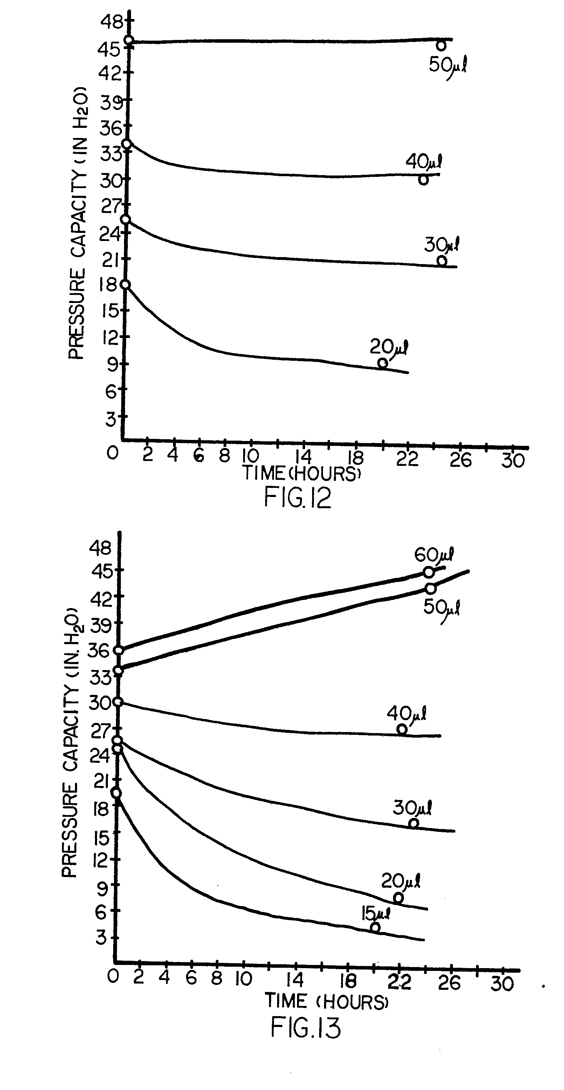

Fig. 12 represents a graphical illustration of pressure capacity with time with varying amounts of ferrofluid quantities with the ferrofluid added to the top pole piece only, that is 70 of Fig. 8. This Fig. 12 illustrates that only 50 microlitres of ferrofluid is required to provide a constant pressure capacity of 45 inches of water with the tapered seal design of the seal of Fig. 8.

Fig. 13 is a graphical illustration of pressure capacity with time with various amounts of ferrofluid added to the top pole piece only of the seal of Fig. 9, that is, the compound pole piece or the side step pole piece 84. As shown by the data in Fig. 13, relatively constant pressure capacity is obtained in only 40 microlitres of ferrofluid in the air gap with a pressure capacity of around 27 inches, while at higher ferrofluid inventory quantities in the air gaps of 50 and 60 $\mu\ell$ the pressure capacity actually increases with time.

Thus, by the employment of a seal pole piece design of the present invention wherein the magnetic field or gradient is reduced across the air or radial gap with, e.g. a tapered, side step, or middle step or with other pole piece designs to reduce the magnetic field or gradient across the air or radial gap, typically below $10^4$ gauss/cm, an effective exclusion-type seal is provided wherein the pressure capacity does not change significantly with time and wherein less ferrofluid is used and which avoids the problem of ferrofluid weeping and other problems associated with the prior art exclusion seal as illustrated in Fig. 1.

The ferrofluid exclusion seals of the invention and the method of providing such seals by reducing the field gradient are particularly useful as exclusion seals wherein the pressure capacity of the seal is not a critical design factor and wherein a slightly lower pressure capacity over the standard exclusion seal is permissible, particularly in textile spindles, computer disk drive spindles, and other rotary shafts applications wherein stable pressure capacity over time and at relatively modest pressure capacities of say 5 inches to about 50 inches of water may be employed. Thus, the problem associated with the employment of $1\frac{1}{2}$ times or more of ferrofluid as required in the standard seal in order to obtain a stable pressure capacity is avoided together with the problem of weeping and an improved ferrofluid exclusion seal and method is provided.

CLAIMS:

1. A ferrofluid exclusion seal apparatus comprising

an annular permanent magnet to surround a rotary shaft element to be sealed and

a first pole piece element having a one end and another end, one end in a magnetic flux relationship with the permanent magnet, and the other end to extend into a close, non-contacting relationship with the surface of a shaft element to be sealed characterized in that

said other end of said first pole piece element has a step-like or tapered end means to provide a first radial sealing gap between the end means and the surface of the shaft element to retain a sealing amount of ferrofluid in the sealing gap by magnetic flux, and a second radial air gap between the other end of the end means and the surface of the shaft element, the second radial air gap lying on at least one side of the first radial sealing gap, the end means providing for a magnetic flux gradient across the free surface of ferrofluid retained within the sealing gap of about $10^4$ gauss/cm or less to provide a ferrofluid seal which has a static pressure which does not change with time.

2. The seal apparatus of claim 1 including a rotary shaft element wherein the first radial sealing gap ranges from about 2 to 8 mils and the second radial air gap ranges from about 4 to 16 mils.

3. The seal apparatus of claim 1 including a rotary shaft element wherein the second radial air gap ranges from about 2 to 3 times the first radial sealing gap.

4. The seal apparatus of claim 1 including a rotary shaft element and ferrofluid in the first radial sealing gap wherein the magnetic flux gradient across the free surfaces of the ferrofluid is less than about $10^3$ gauss/cm.

5. The seal apparatus of claim 1 including the rotary shaft element and ferrofluid in the first radial sealing gap wherein the amount of ferrofluid ranges from about 40 to 60 microlitres.

6. The seal apparatus of claim 1 including a rotary shaft element and ferrofluid in the first radial sealing gap wherein the static pressure capacity of the seal apparatus ranges from about ½ to 2 psi for the first pole piece.

7. The seal apparatus of any preceding claim which further includes a second pole piece element having a one and another end, the one end lying in a magnetic flux relationship with the opposite end of the annular permanent magnet and the other end to extend or extending into a close, non-contacting relationship with the surface of the rotary shaft element to be sealed to form a radial gap therewith, whereby ferrofluid may be or is retained in the radial gap under the second pole piece element to provide a seal with the surface of the rotary shaft element.

8. The sealing apparatus of any preceding claim wherein the end means at the other end of said first pole piece element comprises a generally side or centrally extending step element to form a first radial sealing gap and second or second and third radial air gaps at said other end on one or either side of the radial sealing gap.

9. The seal apparatus of claim 8 wherein the step element comprises a generally rectangular step element and the second or second and third radial air gaps have a radial dimension from 2 to 3 times that of the radial sealing gap.

10. The seal apparatus of claim 1 to 7 wherein the end means at the other end of said first pole piece element comprises a trapezoidal-like shape tapered pole piece to define a radial sealing gap and a defined tapered radial air gap on either side of

0182656

- 29 -

the radial sealing gap.

11. The seal apparatus of claim 9 or 10 wherein the first pole piece containing the side step element comprises a compound pole piece formed of a pole piece element which defines the side step element and another pole piece element secured thereto to form the side step portion of the side step pole piece.

12. The seal apparatus of any preceding claim wherein the pole piece element ranges from about 20 to 40 mils in thickness and the annular permanent magnet ranges from about 80 to 150 mils in thickness.

13. A method of sealing a rotary shaft with a seal which does not change in pressure capacity with time comprising forming a radial sealing gap and a larger adjacent radial air gap at the one end of a magnetic pole piece with the surface of the rotary shaft to be sealed and retaining within the radial sealing gap a defined quantity of a sealing amount of ferrofluid to form an O-ring ferrofluid seal and maintaining a magnetic flux gradient across the free surfaces of the ferrofluid in the radial sealing gap of about $10^4$ gauss/cm or less.

14. The method of claim 13 wherein the magnetic field in the radial sealing gap ranges from about 3,000 to 11,000 gauss.

0182656

PRIOR ART
FIG.1

MAXIMUM PRESSURE
CAPACITY

1.5 x GAP VOLUME

PRESSURE CAPACITY

FERROFLUID QUANTITY

FIG.2

FIG.3

FIG.4

*Y-axis: STATIC PRESSURE CAPACITY*
*X-axis: TIME (HOURS) — 6, 12, 18, 24*
*Curves: 3×GAP VOLUME, 2.5×GAP VOLUME, 1.5×GAP VOLUME*

FIG.5

*Y-axis: MAGNETIC FLUX DENSITY GAUSS*
*X-axis: POLE PIECE WIDTH*
*Labels: AIR, MAGNET SIDE*

FIG.6

*Y-axis: MAGNETIC FIELD GRADIENT (GAUSS/CM)*
*X-axis: POLE PIECE WIDTH*

FIG.7

FIG.8

FIG. 9

FIG.10

FIG.11

0182656

0182656

FIG.12

FIG.13